## Europäisches Patentamt

## European Patent Office

## Office européen des brevets

(11) Veröffentlichungsnummer: **0 230 623**
**A2**

(12) # EUROPÄISCHE PATENTANMELDUNG

(21) Anmeldenummer: **86117691.5**

(22) Anmeldetag: **18.12.86**

(51) Int. Cl.4: **B62D 15/02** , B62D 53/02

(30) Priorität: **21.01.86 US 821385**

(43) Veröffentlichungstag der Anmeldung:
**05.08.87 Patentblatt 87/32**

(84) Benannte Vertragsstaaten:
**DE ES FR GB**

(71) Anmelder: **DEERE & COMPANY**
**1 John Deere Road**
**Moline Illinois 61265(US)**

(72) Erfinder: **Ruhter, Martin Lavern**
**2065 Admiral**
**Dubuque Iowa 52001(US)**

(74) Vertreter: **Sartorius, Peter**
**DEERE & COMPANY European Office, Patent**
**Department Postfach 503 Steubenstrasse**
**36-42**
**D-6800 Mannheim 1(DE)**

(54) **Kraftfahrzeug.**

(57) Ein Motorgrader weist einen die Fahrerkabine tragenden Hauptrahmen (12) auf, der über eine Gelenkverbindung mit einem die Brennkraftmaschine tragenden hinteren Rahmen (14) gelenkig verbunden ist. Die gegenseitige Verstellung der beiden Rahmen (12, 14) wird über einen elektrischen mit einer Anzeigevorrichtung (37) verbundenen Meßwertnehmer erfaßt, der fest mit dem Hauptrahmen verbunden ist und über eine Gestängeanordnung (39, 51) mit dem hinteren Rahmen in Verbindung steht.

Fig. 2

EP 0 230 623 A2

## Kraftfahrzeug

Die Erfindung bezieht sich auf ein Kraftfahrzeug mit einem steuerbaren, auf Bodenrädern abstützbaren Hauptrahmen und einem die Brennkraftmaschine aufnehmbaren Rahmen, der mindestens eine sich nach vorne erstreckende Gelenkplatte aufweist, die über einen vertikal verlaufenden Gelenkbolzen an eine sich nach hinten erstreckende, mit dem Hauptrahmen verbundene Platte schwenkbar angeschlossen ist.

Es ist bereits ein Kraftfahrzeug, insbesondere ein Motorgrader, bekannt, der zwischen den beiden gelenkig miteinander verbundenen Hauptrahmen ein mechanisches Gestänge aufweist, das im Bereich der Gelenkverbindung angeordnet ist und den Lenkausschlag zwischen den beiden Rahmen erfaßt und ihn dann auf einen verschiebbar gelagerten Meßpfeil überträgt, der vom Fahrerstand aus beobachtbar ist. Das Gestänge liegt jedoch relativ ungeschützt zwischen den Gelenkteilen, so daß hochgeworfenes Erdgut zu einer sehr starken Verschmutzung bzw. zur Beschädigung der Gestängeanordnung führt, so daß auch die Meßergebnisse über den Lenkausschlag beeinträchtigt werden.

Demgegenüber liegt der Erfindung die Aufgabe zugrunde, die Meßvorrichtung zur Erfassung des Lenkausschlages der beiden gelenkig miteinander verbundenen Rahmen derart auszubilden und anzuordnen, daß eine einwandfreie und exakte Übertragung der Meßergebnisse auf die Anzeigevorrichtung möglich ist. Diese Aufgabe wird dadurch gelöst, daß ein elektrischer Meßwertnehmer zur Umwandlung des Stellweges beim Lenkvorgang des steuerbaren Hauptrahmens in elektrische Signale mit einer Anzeigevorrichtung auf elektrische Weise zusammenwirkt, die den Grad und die Richtung des Stellweges des zweiten Rahmens gegenüber dem Hauptrahmen anzeigt, wobei mit der Anzeigevorrichtung mittel-oder unmittelbar ein am Tragteil des Hauptrahmens angeordneter Meßarm verbunden ist, der ferner mittel-oder unmittelbar mit der Gelenkplatte verbunden ist. Durch die Verwendung eines elektrischen Meßwertnehmers in Verbindung mit einem mechanischen Gestänge ist eine relativ leichte Übertragung und Erfassung des Stellweges des einen Rahmens gegenüber dem anderen Rahmen möglich, so daß am Fahrerstand des Kraftfahrzeuges der Lenkausschlag sehr genau verfolgt werden kann. Die Verwendung eines elektrischen Meßwertnehmers läßt sich an jeder geeigneten Stelle zwischen den beiden Rahmenteilen im Bereich der Gelenkverbindung anordnen, insbesondere an einer Stelle, die dem hochgeschleuderten Erdreich beim Arbeitseinsatz des Kraftfahrzeuges, insbesondere des Motorgraders, nicht ausgesetzt ist. Wird beispielsweise der Meßwertnehmer bei einem Erdbewegungsfahrzeug bzw. einem Motorgrader eingesetzt, so ist es vorteilhaft, daß dieser derart geschützt ist, daß er auch bei Wartungsarbeiten am Fahrzeug nicht beschädigt werden kann, insbesondere dann, wenn die Bedienungsperson die Fahrerkabine im Bereich der Gelenkverbindung zwischen dem Gehäuse der Verbrennungskraftmaschine und der Frontseite der Fahrerkabine besteigen muß. Da der mechanische Stellweg auf einfache Weise mittels des Meßwertnehmers in elektrische Stellgrößen umgewandelt werden kann, lassen sich diese Meßwerte auch über größere Entfernungen auf die entfernt liegende Anzeigevorrichtung übertragen, die in vorteilhafter Weise im Bereich der Lenksäule des Kraftfahrzeuges plaziert ist. In vorteilhafter Weise erstreckt sich der vertikal verlaufende Meßarm durch eine im Tragteil des Hauptrahmens vorgesehene Öffnung, so daß auf einfache Weise das mechanische Gestänge auf der einen Seite und der wesentlich empfindlichere elektrische Meßwertnehmer auf der anderen Seite des Tragteils vorgesehen werden kann. Somit ist der Meßwertnehmer weitgehend vor Verunreinigungen geschützt. Hierzu ist es ferner vorteilhaft, daß die zwischen dem Meßwertnehmer und dem Gelenkteil vorgesehene Gestänge nicht an der Außenseite des Tragteiles vorbeilaufen, wobei insbesondere im unteren Bereich des Tragteiles Rahmenteile vorgesehen sind, die seitlich herausstehen und als Schutzvorrichtung dienen und somit hochgeschleuderte Schmutzpartikel zurückhalten, so daß diese nicht auf die mechanischen bzw. elektrischen Teile auftreffen können.

Eine effektive und einfache Übertragung erhält man dadurch, daß das eine Gestänge horizontal verläuft und direkt mit der Gelenkplatte verbunden ist, wobei zur Justierung das Gestänge längenveränderlich ausgebildet sein kann. Ferner ist es möglich, zumindest eine Anschlußstelle des Gestänges mit einer Langlochöffnung zu versehen. Einen guten Schutz für Teile der Meßvorrichtung erhält man dadurch, daß diese zwischen den horizontal verlaufenden Platten der Lenkvorrichtung angeordnet sind.

Im folgenden wird die Erfindung anhand von lediglich einen Ausführungsweg darstellenden Zeichnungen näher erläutert. Es zeigt:

Fig. 1 eine perspektivische Darstellung des vorderen Teils eines Motorgraders, wobei Teile des Motorgraders weggeschnitten sind, um die erfindungswesentlichen Merkmale der Gelenkanordnung besser darstellen zu können,

Fig. 2 ebenfalls eine perspektivische Darstellung der Gelenkvorrichtung des Motorgraders.

In der Zeichnung ist mit 10 eine Winkeleinstellvorrichtung für ein landwirtschaftliches Fahrzeug, beispielsweise einen Schlepper, insbesondere einen Motorgrader 11, bezeichnet, der einen steuerbaren Hauptrahmen 12 aufweist, der sich auf in der Zeichnung nicht dargestellten Laufrädern abstützt. Auf dem hinteren Hauptrahmen 12 befindet sich eine Fahrerkabine 13. Der Schlepper 11 ist ferner mit einem vorderen Rahmen 14 ausgerüstet, der sich auf Laufrädern 16 abstützt und der zur Aufnahme einer Brennkraftmaschine 17 dient.

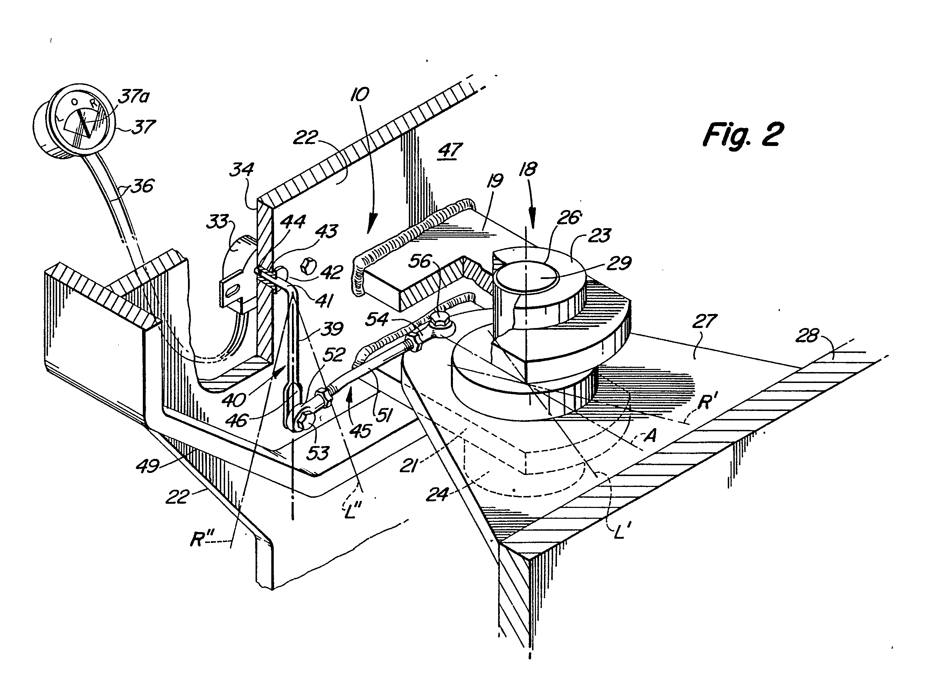

Zur Gelenkverbindung des Hauptrahmens 12 mit dem Rahmen 14 weist die Gelenkanordnung 10 ein Gelenk 18 auf, zu dem zwei sich nach hinten erstreckende Platten 19 und 21 gehören (siehe Fig. 2). Die Platten sind beispielsweise mit dem hinteren Ende eines aufrechten Tragteiles 22 fest verschweißt. Die obere Platte 19 weist einen Ringflansch 23 auf, der über die Oberseite der Platte 19 herausragt, während die untere Platte 21 ebenfalls mit einem nach unten gerichteten hervorstehenden Ringflansch 24 ausgestattet ist. In den Ringflanschen 23 und 24 befinden sich untereinander fluchtende Bohrungen 26.

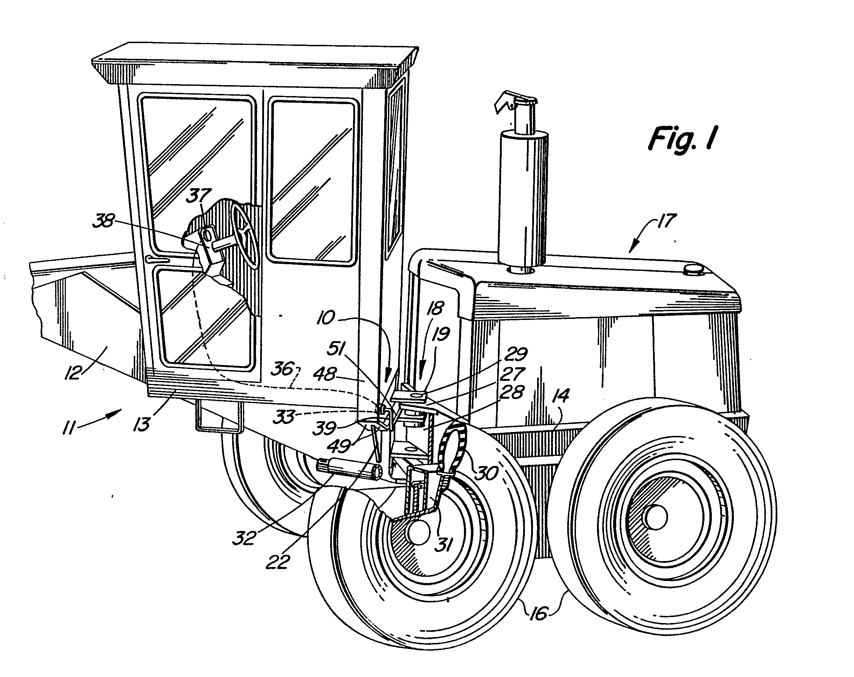

Am hinteren Ende des Rahmens 14 ist eine vertikal verlaufende Tragplatte 28 vorgesehen, die zum Anschluß einer Gelenkplatte 27 dient. Die Gelenkplatte 27 ist ebenfalls mit einer Bohrung versehen, die zu den Bohrungen 26 fluchtet, so daß in den Bohrungen 26 ein vertikal verlaufender Gelenkbolzen 26 aufgenommen werden kann. Auf diese Weise kann der Hauptrahmen 12 sowie der Rahmen 14 des Motorgraders 11 horizontal verschwenkt werden, so daß das Fahrzeug auf diese Weise gelenkt werden kann. Wie aus Fig. 2 hervorgeht, befindet sich vor dem Tragteil 22 die Winkeleinstellvorrichtung 10, die zur Erfassung bzw. Abtastung der gegeneinander verschwenkbaren Rahmen 12 und 14 dient. Wie aus Fig. 1 hervorgeht, ist ein Teil eines Mantels 30 sowie ein Teil eines Trägers 31 weggeschnitten, um die Lage eines Hydraulikzylinders 32 unter der Fahrerkabine 13 besser darstellen zu können. Die Winkeleinstellvorrichtung 10 weist, wie aus Fig. 3 hervorgeht, eine Abtastvorrichtung 33 auf, die zur Erfassung der Bewegung zwischen den Rahmenteilen dient und diese Meßwerte in elektrische Signale umwandelt. In der Fahrerkabine 13 befindet sich eine Anzeigevorrichtung 37 mit einer Anzeigeskala 37a, die über eine elektrische Leitung 36 mit der Abtastvorrichtung 33 verbunden ist. Eine horizontal verlaufende Gestängeanordnung 45 ist einenends an die Gelenkplatte 27 und anderenends an eine Abtastübertragungseinrichtung 40 angeschlossen, um die horizontale Bewegung des Rahmens 14 gegenüber dem Hauptrahmen 12 abzutasten und diese Stellwerte der elektrischen Abtastvorrichtung 33 zuzuführen, die den Stellweg in elektrische Signale umwandelt und es auf die Anzeigevorrichtung 37 überträgt.

Die Abtastvorrichtung 33, die an dem Tragteil 22 montiert ist, weist einen gewissen Abstand zum Gelenk 18 auf und ist ferner durch die Tragplatte 22 von dem Gelenk 18 geschützt, da der Tragteil 22 zwischen der Abtastvorrichtung 33 und dem Gelenk 18 vorgesehen ist. Die über die elektrische Leitung 36 mit der Abtastvorrichtung 33 verbundene Anzeigevorrichtung 37 weist neben der Anzeigeskala eine Anzeigenadel 37a auf, die auf der Skala schwenkbar gelagert ist und durch ihren Ausschlag nach links L bzw. nach rechts R anzeigt, wie weit der Rahmen 14 gegenüber dem Hauptrahmen 12 verschwenkt worden ist. Die Anzeigevorrichtung 37 ist, wie aus Fig. 1 hervorgeht, auf der Bedienungskonsole 38 im Bereich des Lenkrades vorgesehen.

Wie aus Fig. 2 hervorgeht, weist die Abtastübertragungseinrichtung 40 einen L-förmig ausgebildeten Abtastarm 39 auf, der aus einem horizontal verlaufenden oberen Teil 41 und einem vertikal verlaufenden Teil 46 besteht. Der horizontal verlaufende Teil 41 des Abtastarmes 39 erstreckt sich durch eine federelastisch ausgebildete Buchse 42, die in einer in dem Tragteil 22 vorgesehenen Öffnung 43 aufgenommen ist. Der vertikal verlaufende Teil 46 des Abtastarmes 39 verläuft dicht und parallel zur Rückseite 47 des Tragteiles 22 des Hauptrahmens 12.

Wie aus Fig. 2 hervorgeht, weist die Gestängeanordnung 45 ferner ein horizontal verlaufendes Gestänge 51 auf, das mit seinem einen äußeren Ende bzw. einem Gelenkauge 52 und einem Gelenkbolzen 53 an das untere Ende des Teiles 46 des Abtastarmes 39 und mit seinem anderen Ende um 90° verdreht ebenfalls über ein Gelenkauge 54 an einen vertikal verlaufenden Gelenkbolzen 56 angeschlossen ist. Der Gelenkbolzen 56 ist mit der Gelenkplatte 27 fest verbunden.

Um die Winkeleinstellvorrichtung 10 vor einer Bedienungsperson, die beispielsweise aus der Fahrerkabine nach vorne hin aussteigt, und auch vor Verunreinigungen, die von den Laufrädern 16 hochgeworfen werden, zu schützen, erstreckt sich die Seitenplatte 48 der Fahrerkabine 13 vor die Winkeleinstellvorrichtung 10. Die Seitenplatte 48 geht über in einen geneigt verlaufenden und horizontal verlaufenden Rahmenteil 49, der die Gestängeanordnung 45 ferner von unten her schützt (siehe Fig. 2). Der Rahmenteil 49 ist, wie aus Fig. 2 hervorgeht, beiderseits des Tragteiles 22 angeordnet. Die Breite der Seitenplatte 48 und des Rahmenteiles 49 schützt die Gestängeanordnung 45 ferner vor allen Teilen, die beispielsweise durch den Arbeitseinsatz des Motorgraders hochgeschleudert werden können. In Fig. 2 ist auf der Gelenkplatte der Schwenkbereich des Rahmens 14 durch die Linien L' und R' angegeben, die sich durch den Gelenkbolzen 29 erstrecken. Bewegt sich beispielsweise die Gelenkplatte 27 des Rahmens 14 in Richtung der Linie L', so bewegt sich auch die Gestängeanordnung 45 nach rechts und somit der Teil 46 der Abtasteinrichtung 40. Die Schwenkbewegung der Gelenkplatte 27 wird in der Abtastvorrichtung 33 erfaßt und in ein elektrisches Signal umgewandelt, das dann über die elektrische Leitung 36 der Anzeigevorrichtung 37 und somit der Nadel 37a übertragen wird, die ebenfalls nach links L bzw. nach rechts R ausschwenkt, je nachdem wie sich die Gelenkplatte 27 bewegt. Auf diese Weise kann die Bedienungsperson den Ausschlag des Rahmens 14 gegenüber dem Hauptrahmen 12 auf der Anzeigevorrichtung 37 genau ablesen. Die Schwenkbewegung des Rahmens 14 in Richtung R' mit Bezug auf den Hauptrahmen 12, ausgehend von der Mittellinie "A", bewirkt eine Verstellung der Gestängeanordnung 45 und somit eine Verstellung der Nadel 37a in Richtung R.

Aufgrund des vorteilhaften Anschlusses des Teiles 41 an die Abtastvorrichtung 33 kann die Abtastvorrichtung 33 eingestellt werden, ohne daß der Abtastarm 39 abgenommen zu werden braucht. Die vorteilhafte Ausbildung der Gestängeanordnung 45 ermöglicht mittels des Gestänges 51 ohne weiteres eine Übertragung der horizontalen Bewegung auf den Abtastarm 39, der in vertikal verlaufender Ebene angeordnet ist. Eine einwandfreie Nullstellung der Abtastvorrichtung 33 wird durch Herausoder Hereindrehen der am Gestänge 31 angeordneten Gelenkaugen 52, 54 erreicht.

### Ansprüche

1. Kraftfahrzeug mit einem steuerbaren, auf Bodenrädern abstützbaren Hauptrahmen (12) und einem die Brennkraftmaschine (17) aufnehmbaren Rahmen (14), der mindestens eine sich nach vorne erstreckende Gelenkplatte (27) aufweist, die über einen vertikal verlaufenden Gelenkbolzen (29) an eine sich nach hinten erstreckende, mit dem Hauptrahmen (12) verbundene Platte (19) schwenkbar angeschlossen ist, dadurch gekennzeichnet, daß ein elektrischer Meßwertnehmer (33) zur Umwandlung des Stellweges beim Lenkvorgang des steuerbaren Hauptrahmens (12) in elektrische Signale mit einer Anzeigevorrichtung (37) auf elektrische Weise zusammenwirkt, die den Grad und die Richtung des Stellweges des zweiten Rahmens (14) gegenüber dem Hauptrahmen (12) anzeigt, wobei mit der Anzeigevorrichtung mittel-oder unmittelbar ein am Tragteil (22) des Hauptrahmens (12) angeordneter Meßarm (39) verbunden ist, der ferner mitteloder unmittelbar mit der Gelenkplatte (27) verbunden ist.

2. Kraftfahrzeug nach Anspruch 1, dadurch gekennzeichnet, daß der Meßarm (39) sich durch eine im Hauptrahmen bzw. in dem Tragteil (22) des Hauptrahmens (12) vorgesehene Öffnung (43) erstreckt und daß das sich durch die Öffnung (43) erstreckende Ende mit dem Meßwertnehmer (33) verbunden ist.

3. Kraftfahrzeug nach Anspruch 1 und 2, dadurch gekennzeichnet, daß die Gelenkplatte (27) des einen Rahmens (14) mit einem Gestänge (51) gelenkig verbunden ist, das einenends mit dem Meßarm (39) gelenkig verbunden ist.

4. Kraftfahrzeug nach Anspruch 1, dadurch gekennzeichnet, daß der Meßwertnehmer (33) an der von der Gelenkverbindung abgewandten Seite des Tragteils (22) angeordnet ist.

5. Kraftfahrzeug nach Anspruch 2, dadurch gekennzeichnet, daß der Meßarm (39) L-förmig ausgebildet ist, wobei der obere horizontal verlaufende Schenkel (41) des Meßarmes (39) sich durch die Öffnung (43) des Tragteils (22) erstreckt und der vertikal verlaufende Schenkel (46) parallel und dicht an der Außenseite des Tragteils (22) entlangläuft und mit dem an die Gelenkplatte (27) angeschlossenen Gestänge (51) gelenkig verbunden ist.

6. Kraftfahrzeug nach Anspruch 2 und 5, dadurch gekennzeichnet, daß in der Öffnung (43) zur Aufnahme des horizontal verlaufenden Schenkels (41) eine federelastische Buchse (44) vorgesehen ist.

7. Kraftfahrzeug nach Anspruch 1, dadurch gekennzeichnet, daß der Meßwertnehmer (33) bzw. die zugehörigen Verbindungselemente einstellbar ausgebildet sind.

8. Kraftfahrzeug nach Anspruch 7, dadurch gekennzeichnet, daß das horizontal verlaufende Gestänge (51) längenveränderlich ausgebildet und einenends in einer Langlochöffnung verschiebbar aufgenommen ist.

9. Kraftfahrzeug nach Anspruch 2 und 3, dadurch gekennzeichnet, daß der Meßarm (39) rechtwinklig zum Gestänge (51) angeordnet ist.

10. Kraftfahrzeug nach einem oder mehreren der vorherigen Ansprüche, dadurch gekennzeichnet, daß an dem Tragteil (22) zwei mit Abstand zueinander angeordnete Platten (19, 21) rechtwinklig befestigt sind, zwischen denen die am Rahmen (14) befestigte Gelenkplatte (27) mittels des Gelenkbolzens (28) schwenkbar aufgenommen ist und sich das Gestänge (51) erstreckt, das parallel und dicht an der Außenseite des Tragteils entlangläuft.

11. Kraftfahrzeug nach Anspruch 1, dadurch gekennzeichnet, daß der Tragteil (22) zumindest im unteren Bereich von seitlich herausstehenden Rahmenteilen (49) umgeben ist, die die Gestänge (51, 39) vor Verunreinigungen schützen.

Fig. I

Fig. 2

37a
37
36
34
33
22
10
47
44
43
42
41
39
52
40
46
53
45
51
49
22
R"
L"
54
56
19
18
26
23
29
27
28
R'
A
21
24
L'
0 230 623